# EUROPÄISCHE PATENTANMELDUNG

(11) **EP 1 628 201 A1**
(43) Veröffentlichungstag der Anmeldung: **22.02.2006**
(21) Anmeldenummer: 04019707.1
(22) Anmeldetag: 19.08.2004
(51) Int. Cl.: G06F 3/12

(54) **Daten-Ausgabe-System mit Druckeinrichtung, und Daten-Ausgabe-Verfahren, insbesondere zur Durchführung eines Test-Drucks**

(71) Anmelder: UBS AG, 8001 Zürich (CH)
(72) Erfinder: Dubach, Ernst, CH-5620 Bremgarten (CH); Codispoti, Guiseppe, 8041 Zürich (CH)
(74) Vertreter: Jehle, Volker Armin

(57) **Zusammenfassung**

Die Erfindung betrifft ein Daten-Ausgabe-Verfahren, und ein Daten-Ausgabe-System (1), welches aufweist:
- eine Druckeinrichtung (3);
- eine Datenbank-Einrichtung (7), in welcher für eine Vielzahl von Daten-Ausgabe-System-Nutzem entsprechende Nutz- und/oder Steuerdaten gespeichert sind; und
- eine Daten-Ausgabe-Steuereinrichtung (2), welche zu von der Daten-Ausgabe-Steuereinrichtung (2) bestimmten Zeitpunkten - entsprechenden Nutzern zugeordnete - Ausgabe-Daten-Sätze an die Druckeinrichtung (3) liefert, wobei eine vordefinierte Teilmenge der Ausgabe-Daten-Sätze - zur Durchführung eines Test-Drucks - bereits vorab an die Druckeinrichtung (3) geliefert werden.

## Beschreibung

Die Erfindung betrifft ein Daten-Ausgabe-System mit einer Druckeinrichtung, einer Datenbank-Einrichtung, und einer Daten-Ausgabe-Steuereinrichtung, und ein Daten-Ausgabe-Verfahren.

Im Stand der Technik (z.B. von Banken, Versicherungen, etc.) benutzte Daten-Ausgabe-Systeme weisen z.B. eine Druckeinrichtung, eine Datenbank-Einrichtung, und ― als Schnittstelle zwischen Druckeinrichtung, und Datenbank-Einrichtung - eine entsprechende Daten-Ausgabe-Steuereinrichtung auf.

Bei der Druckeinrichtung kann es sich z.B. um eine entsprechende Rotationsdruckmaschine handeln, z.B. eine Bogen-, bevorzugt eine Rollen-Rotationsdruckmaschine (z.B. um eine nach einem entsprechenden Hoch-, Flach- , oder Tiefdruckverfahren arbeitende (Ein- oder Mehrfarbendruck-) Rollen-Rotationsdruckmaschine).

Bei einer Rollen-Rotationsdruckmaschine läuft eine von einer entsprechenden Papier-Rolle abgerollte, zusammenhängende Papier-Bahn durch die Maschine, und wird erst nach dem Bedrucken und Trocknen geschnitten, ggf. gefalzt, und verpackt (z.B. kuvertiert).

In der Datenbank-Einrichtung können eine Vielzahl von Daten gespeichert sein, z.B. entsprechende Bank-Kundendaten (z.B. Vor- und Nachnamen, bzw. Firmennamen, Adressen, Informationen bzgl. der jeweils zu verwendenden Sprache, etc.), bankinteme Daten (z.B. bankinteme Adressen, etc.), usw., usw.

Die Daten-Ausgabe-Steuereinrichtung erzeugt - unter Verwendung der o.g. oder weiterer, in der Datenbank-Einrichtung (und/oder einer oder mehreren weiteren Datenbank-Einrichtungen) gespeicherten, und/oder von entsprechenden Daten-Liefer-Applikationen bereitgestellten Daten ― entsprechende Daten-Satz-Druck-Files, die an die Druckeinrichtung geliefert, und dort ausgedruckt werden.

Bei den o.g. weiteren Daten kann es sich z.B. um entsprechende Kontostand-Daten, Konto-Bewegungs-Daten (Konto-Umbuchungs-Daten, Zins-Zahlungs-Daten, Konto-Dienstleistungspreis-Daten), etc. handeln, oder z.B. um Depot-Stand-Daten, Depot-Bewegungs-Daten (Ankaufs-, Verkaufs-, Dividenden- / Zins-Zahlungs-Daten, Depot-Dienstleistungspreis-Daten) usw., usw.

Zu bestimmten Zeiten ― insbesondere am Monatsende ― kann es ― insbesondere bei Daten-Ausgabe-Systemen von Großbanken - zu einem äußerst hohen Druckaufkommen kommen.

Beispielsweise können am Monatsende ― ggf. automatisch ausgelöste ― Daten-Ausgabe-Aufträge z.B. zum Ausdruck mehrerer tausend Kontoauszüge, mehrerer tausend Depotauszüge, etc., etc. führen.

Ist der Ausdruck fehlerhaft, entstehen relativ hohe Kosten, da ggf. der ― gesamte ― Ausdruck nochmals getätigt werden muß.

Die Erfindung hat zur Aufgabe, ein neuartiges Daten-Ausgabe-System, und ein neuartiges Daten-Ausgabe-Verfahren zur Verfügung zu stellen, insbesondere ein neuartiges Daten-Ausgabe-System, und ein neuartiges Daten-Ausgabe-Verfahren, mit dem die o.g. und/oder weitere Nachteile des Stands der Technik überwunden werden können.

Sie erreicht dieses und weitere Ziele durch die Gegenstände der Ansprüche 1 und 16. Vorteilhafte Weiterbildungen der Erfindung sind in den Unteransprüchen angegeben.

Gemäß einem Grundgedanken der Erfindung wird ein Daten-Ausgabe-System bereitgestellt, welches aufweist:
- eine Druckeinrichtung;
- eine Datenbank-Einrichtung, in welcher für eine Vielzahl von Daten-Ausgabe-System-Nutzern entsprechende Nutz- und/oder Steuerdaten gespeichert sind; und
- eine Daten-Ausgabe-Steuereinrichtung, welche zu von der Daten-Ausgabe-Steuereinrichtung bestimmten Zeitpunkten ― entsprechenden Nutzern zugeordnete - Ausgabe-Daten-Sätze an die Druckeinrichtung liefert, wobei eine vordefinierte Teilmenge der Ausgabe-Daten-Sätze ― zur Durchführung eines Test-Drucks - bereits vorab an die Druckeinrichtung geliefert wird.

Vorteilhaft wird die vorab gelieferte Teilmenge der Ausgabe-Daten-Sätze dann - als Test-Druck - an der Druckeinrichtung ausgedruckt.

Dadurch können Fehler frühzeitig ― noch vor der Durchführung des "eigentlichen " Ausdrucks ― erkannt, und behoben werden.

Die Erfindung wird nun anhand mehrerer Ausführungsbeispiele sowie der beigefügten Zeichnung näher erläutert. In der Zeichnung zeigt:
- Fig. 1: ein Daten-Ausgabe-System gemäß einem Ausführungsbeispiel der vorliegenden Erfindung;
- Fig. 2: ein Flussdiagramm zur Veranschaulichung von bei einem Daten-Ausgabe-Verfahren gemäß einem Ausführungsbeispiel der Erfindung durchgeführten Verfahrensschritten; und
- Fig. 3: eine schematische Detail-Darstellung der bei einer vorteilhaften Ausgestaltung der Erfindung verwendeten Daten-Ausgabe-Steuereinrichtungen, und Daten-Ausgabe-Kanäle.

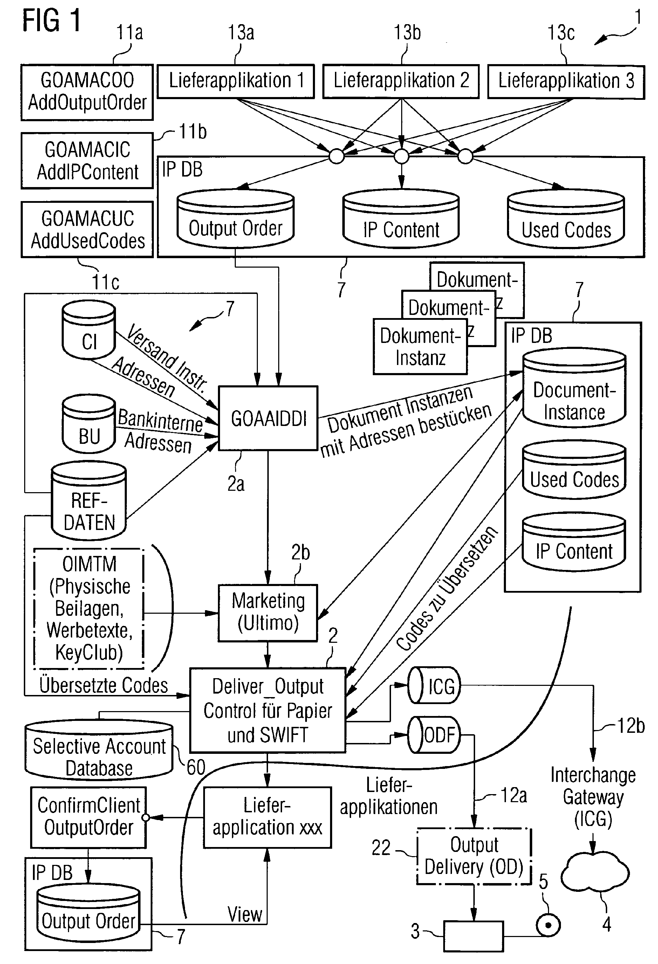

Gemäß Figur 1 weist ein Daten-Ausgabe-System 1 gemäß einem Ausführungsbeispiel der vorliegenden Erfindung eine oder mehrere Druckeinrichtungen 3, eine oder mehrere Datenbank-Einrichtungen 7, und ― als Schnittstelle zwischen Druckeinrichtung 3, und Datenbank-Einrichtung 7 - eine oder mehrere Daten-Ausgabe-Steuereinrichtungen 2 auf.

Das Daten-Ausgabe-System 1 kann ― vorzugsweise ― zur Ausgabe von in einer Bank (oder z.B. auch einer Versicherung, etc.) anfallenden, bzw. von dort eingesetzten Rechnern erzeugten Daten verwendet werden.

Wie aus Figur 1 hervorgeht, weist das Daten-Ausgabe-System 1 mehrere (z.B. mehr als einen (oder alternativ z.B. mehr als zwei oder drei)) Daten-Ausgabe-Kanäle 12a, 12b auf, z.B. einen Druck-Daten-Ausgabe-Kanal 12a ("Papier-Kanal") (oder alternativ z.B. mehrere Druck-Daten-Ausgabe-Kanäle), und einen elektronischen Daten-Ausgabe-Kanal 12b ("SWIFT-Kanal") (oder alternativ z.B. mehrere elektronische Daten-Ausgabe-Kanäle).

Über den Druck-Daten-Ausgabe-Kanal 12a werden ― gesteuert durch die Daten-Ausgabe-Steuereinrichtung 2 ― entsprechende (unter Verwendung der o.g., in der Bank (oder Versicherung, etc.) anfallenden, bzw. von den dort eingesetzten Rechnern erzeugten Daten generierte) Ausgabe-Daten-Sätze an die Druckeinrichtung 3 geliefert.

Bei der Druckeinrichtung 3 kann es sich z.B. um eine entsprechende Rotationsdruckmaschine handeln, z.B. eine Bogen- oder - bevorzugt ― um eine Rollen-Rotationsdruckmaschine 3 (z.B. um eine nach einem entsprechenden Hoch-, Flach-, oder Tiefdruckverfahren arbeitende (Ein- oder Mehrfarbendruck-) Rollen-Rotationsdruckmaschine).

Bei der Rollen-Rotationsdruckmaschine 3 läuft eine von einer entsprechenden Papier-Rolle 5 abgerollte, zusammenhängende Papier-Bahn durch die Maschine 3, und wird erst nach dem Bedrucken und Trocknen geschnitten, ggf. gefalzt, und verpackt (z.B. kuvertiert).

Alternativ oder zusätzlich zur Druckeinrichtung 3 werden die o.g. (und/oder weitere) Ausgabe-Daten-Sätze ― ebenfalls gesteuert durch die Daten-Ausgabe-Steuereinrichtung 2 ― über den elektronischen Daten-Ausgabe-Kanal 12b (auch) an ein oder mehrere elektronische Datenkommunikations-Systeme 4 geliefert, sodaß die Ausgabe-Daten-Sätze durch entsprechende System-Nutzer, insbesondere Bank-Kunden, und/oder Bank-Mitarbeiter elektronisch abgerufen werden können.

Der Abruf kann erst freigegeben werden, wenn von den System-Nutzern ― über das Datenkommunikations-System 4 - entsprechende Passwörter, Kennungen etc. eingegeben worden sind, d.h. der jeweilige System-Nutzer entsprechend freigeschaltet worden ist.

Beim Datenkommunikations-System 4 kann es sich z.B. um ein oder mehrere Rechen-Netze handeln, z.B. das Internet, und/oder ein oder mehrere Intranets, und/oder um ein oder mehrere weitere, elektronische Datenkommunikations-Systeme, z.B. ein öffentliches oder privates Telefonnetz, z.B. Fest-Netz oder Mobilfunk-Netz, etc.

In den o.g. Datenbank-Einrichtungen 7 (z.B. einer Information Package Database ("IP DB"), etc.) können eine Vielzahl von Daten gespeichert sein, z.B. entsprechende Bank-Kundendaten (Client Information ("CI")) (z.B. Vor- und Nachnamen von Privatkunden, bzw. Firmennamen von Firmenkunden, Adressen, etc.), bankinterne Daten ("BU") (z.B. Vor- und Nachnamen von Bank-Mitarbeitern, bankinteme Adressen (Abteilung, Standort-Adresse, etc.)), Steuer-Daten ("Used Codes") (z.B. Informationen bzgl. der jeweils zu verwendenden Sprache, der jeweils zu verwendenden Daten, Prioritäts-Daten, etc., etc.), und/oder eine Vielzahl weiterer Daten, z.B. IP Content Daten, insbesondere entsprechende Nutzdaten (z.B. Kontostand-Daten, Konto-Bewegungs-Daten (Konto-Umbuchungs-Daten, Zins-Zahlungs-Daten, Konto-Dienstleistungspreis-Daten), etc., und/oder z.B. Depot-Stand-Daten, Depot-Bewegungs-Daten (Ankaufs-, Verkaufs-, Dividenden- / Zins-Zahlungs-Daten, Depot-Dienstleistungspreis-Daten) usw., usw.), Daten-Ausgabe-Auftrags-Daten ("Output Order"), etc., etc.

Die Änderung / Erzeugung / Ergänzung entsprechender Output-Order-, und Used-Code-Daten, etc. kann unter Steuerung entsprechender Service-Software-Programme bzw. -Programm-Module 11a, 11b, 11c, etc. erfolgen, und z.B. von entsprechenden Anfragen entsprechender Lieferapplikationen 13a, 13b, 13c (Lieferapplikation 1, Lieferapplikation 2, Lieferapplikation 3, etc.) getriggert werden.

Wie aus Figur 1 hervorgeht, werden aus den in der bzw. den Datenbank-Einrichtungen 7 gespeicherten Daten entsprechende Daten-Sätze enthaltende Daten-Satz-Druck-Files ("Dokumente") erzeugt, die - über den Druck-Daten-Ausgabe-Kanal 12a, und unter Steuerung durch die Daten-Ausgabe-Steuereinrichtung 2 - an die Druckeinrichtung 3 geliefert, und dort ausgedruckt werden.

Dabei können ― wie ebenfalls aus Figur 1 hervorgeht (vgl. z.B. die dort gezeigten (von entsprechenden Software-Programmen bzw. -Programm-Modulen 2a, 2b durchgeführten bzw. veranlassten) Verfahrensschritte) - entsprechenden Nutzdaten (z.B. Kontostands-Daten, Konto-Bewegungs-Daten, oder Depot-Stand-Daten, Depot-Bewegungs-Daten, usw., usw.) entsprechende weitere Daten (z.B. bankinterne Daten, Bank-Kundendaten ― insbesondere Adressen -, etc., etc.) hinzugefügt werden, und den so erzeugten Dokumenten ― weitere ― Daten, insbesondere ― z.B. auf einer weiteren Datenbank-Einrichtung gespeicherte - Werbe-Daten (z.B. Werbetext-Daten, Daten für physikalische Beilagen, Kundenbindungsprogramm- ("KeyClub-") Daten, etc., etc.).

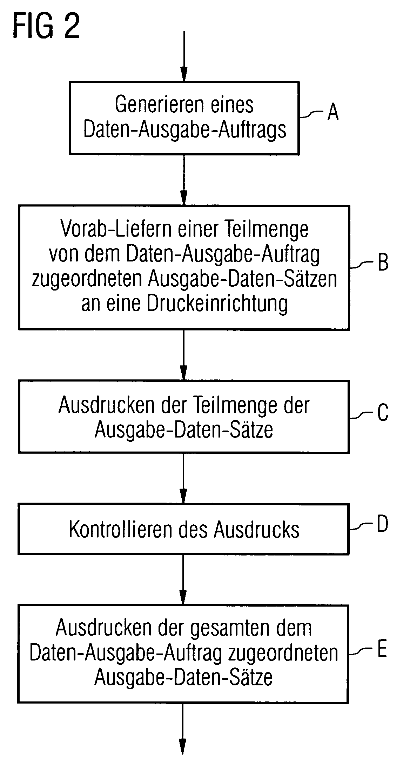

Die Triggerung entsprechender Daten-Ausgabe-Aufträge ("Output Order") für die o.g. Daten-Ausgabe-Kanäle 12a, 12b ― z.B. durch eine entsprechende (Liefer)Applikation ― kann automatisch bzw. semi-automatisch erfolgen, z.B. Zeit-gesteuert (z.B. jede Viertelstunde, jede Stunde, jeden Tag, jede Woche, jeden Monat, etc.), und/oder Bedingungs-gesteuert (z.B. durch einen Zinsabschluß), und/oder Zeit- und Bedingungs-gesteuert (z.B. eine bestimmte Zeit nach einem bestimmten Ereignis), und/oder kann ― durch einen Bank-Mitarbeiter, und/oder einen Bank-Kunden, etc. ― "von Hand" bzw. ad hoc ausgelöst werden (z.B. durch Eingabe eines entsprechenden Daten-Ausgabe-Auftrags an einem an das Daten-Ausgabe-System 1 angeschlossenen Rechner) ― vgl. auch den in Figur 2 gezeigten Verfahrensschritt A.

In einem "Normal-Betriebs-Modus" des Daten-Ausgabe-Systems 1 werden - in Reaktion auf einen entsprechenden ("normalen") Daten-Ausgabe-Auftrag - umgehend (oder bewusst um eine gewisse Verzögerungs-Zeit verzögert) sämtliche, dem jeweiligen Daten-Ausgabe-Auftrag zugeordneten Daten-Sätze bzw. Daten-Satz-Druck-Files bereit- bzw. zusammengestellt, auf einer entsprechenden Speichereinrichtung bzw. Datenbank―Einrichtung zwischengespeichert, und (umgehend, oder - bewußt ― um eine gewisse Verzögerungszeit verzögert) zum Drucken an die Druckeinrichtung 3 geliefert.

Demgegenüber werden in einem "Test-Betriebs-Modus" des Daten-Ausgabe-Systems 1 ― in Reaktion auf einen entsprechenden (insbesondere "von Hand" ausgelösten, oder automatisch bzw. semi-automatisch, z.B. Zeit-gesteuert (z.B. am Ende eines Monats ("Ultimo")) ausgelösten "normalen" oder speziellen "Test-") Daten-Ausgabe-Auftrag ― zunächst nicht sämtliche, dem entsprechenden Daten-Ausgabe-Auftrag zugeordneten Daten-Sätze bzw. Daten-Satz-Druck-Files (fertig) bereit- bzw. zusammengestellt, sondern lediglich eine ― vorbestimmte ― Teilmenge hiervon (z.B. weniger als 50%, insbesondere weniger als 20% oder 10% der ― gesamten ― dem jeweiligen Daten-Ausgabe-Auftrag zugeordneten Daten-Sätze (jedoch z.B. mehr als 1% oder 2%, insbesondere mehr als 5% der jeweiligen Daten-Sätze, etc.) ― z.B. weniger als 10.000 oder 2.000 Daten-Sätze, und/oder z.B. mehr als 50 oder 100 Daten-Sätze, usw.).

Beispielsweise kann lediglich die vorbestimmte Teilmenge der Daten-Sätze bzw. Daten-Satz-Druck-Files fertig zusammengestellt werden, und die übrigen Daten-Sätze bzw. Daten-Satz-Druck-Files jeweils lediglich teilweise bzw. unvollständig ("halbfertiger Zustand" der übrigen Daten-Sätze).

Vorteilhaft kann das Daten-Ausgabe-System 1 insbesondere zu Zeiten mit hohem Druckaufkommen ― z.B. am Monatsende ― (z.B. mittels entsprechender ― z.B. von einem System-Administrator (insbesondere einem Bank-Mitarbeiter) an einem entsprechenden, an das Daten-Ausgabe-System 1 angeschlossenen Rechner eingegebener ― Befehle, oder automatisch) vom o.g. "Normal-Betriebs-Modus" in den o.g. "Test-Betriebs-Modus" gebracht werden (bzw. der o.g., spezielle "Test-" Daten-Ausgabe-Auftrag kann vorzugsweise zu Zeiten mit hohem Druckaufkommen generiert werden).

Die o.g. Teilmenge der dem ("Test"-) Daten-Ausgabe-Auftrag zugeordneten Daten-Sätze wird vorteilhaft (ggf. von Ausnahmen abgesehen, s.u.) unmittelbar (d.h. ohne bewusst gewählte, zusätzliche Verzögerung) bereit- bzw. zusammengestellt, ggf. auf einer entsprechenden Speichereinrichtung bzw. Datenbank―Einrichtung (kurz) zwischengespeichert, und (ggf. von Ausnahmen abgesehen, s.u.) umgehend (d.h. ohne bewusst gewählte, zusätzliche Verzögerung) zum Drucken an die Druckeinrichtung 3 geliefert (vgl. auch den in Figur 2 gezeigten Verfahrensschritt B).

Im o.g. "Test-Betriebs-Modus" wird bzw. werden also der oder die ("Test"-) Daten-Ausgabe-Aufträge bzw. Test-Daten-Teil-Ausgabe-Aufträge mit hoher Priorität, d.h. bevorzugt abgearbeitet (insbesondere mit höherer Priorität, als die o.g. "normalen" Daten-Ausgabe-Aufträge).

Dies gilt nicht für im "Test-Betriebs-Modus" abzuarbeitende, spezielle, höchstpriorisierte Daten-Ausgabe-Aufträge (bzw. für Daten-Ausgabe-Aufträge, die spezielle - höchstpriorisierte - Nutzer (Bank-Kunden) betreffen, und/oder für Daten-Ausgabe-Aufträge, die ― Nutzer-unabhängig ― spezielle, höchstpriorisierte Daten-Sätze betreffen).

Die Priorität eines Nutzers kennzeichnende Daten ("Nutzer-Prioritäts-Daten") können z.B. durch einen System-Administrator (insbesondere einen Bank-Mitarbeiter) definiert werden (z.B. durch Eingabe der entsprechenden Daten an einem an das Daten-Ausgabe-System 1 angeschlossenen Rechner (z.B. auf entsprechende Weisung des Kunden hin)), und/oder durch den jeweiligen Nutzer (insbesondere Bank-Kunden) selbst (z.B. ebenfalls durch Eingabe der entsprechenden Daten an einem an das Daten-Ausgabe-System 1 angeschlossenen Rechner (nachdem entsprechende Passwörter, Kennungen etc. eingegeben worden sind)), etc.

Entsprechend ähnlich können auch die Priorität eines Daten-Satzes (bzw. ― bevorzugt ― die Priorität einer Vielzahl gleichartiger Daten-Sätze) kennzeichnende Daten ("Daten-Satz-Prioritäts-Daten") z.B. durch einen System-Administrator (insbesondere einen Bank-Mitarbeiter) definiert, und an einem entsprechenden an das Daten-Ausgabe-System 1 angeschlossenen Rechner eingegeben werden.

Bei Daten-Sätzen mit hoher bzw. höchster Priorität kann es sich z.B. um entsprechende, gesetzlich vorgeschriebene, oder vertraglich vereinbarte Endfristen auslösende Daten-Sätze handeln (z.B. um Konto-Abschluß-Daten enthaltende Daten-Sätze, etc.), usw.

Sollten im "Test-Betriebs-Modus" die o.g. speziellen, höchstpriorisierten Daten-Ausgabe-Aufträge abzuarbeiten sein (bzw. die o.g. Daten-Ausgabe-Aufträge, die spezielle - höchstpriorisierte - Nutzer (Bank-Kunden) betreffen, und/oder ― Nutzerunabhängig ― spezielle, höchstpriorisierte Daten-Sätze), werden ggf. vorliegende ("Test"- und/oder sonstige) Daten-Ausgabe-Aufträge zunächst zurückgestellt, und ― als erstes ― die dem entsprechenden, speziellen, höchstpriorisierten Daten-Ausgabe-Auftrag zugeordneten Daten-Sätze bereit- bzw. zusammengestellt (vorteilhaft ohne bewusst gewählte, zusätzliche Verzögerung), ggf. auf einer entsprechenden Speichereinrichtung bzw. Datenbank-Einrichtung (kurz) zwischengespeichert, und umgehend (d.h. ohne bewusst gewählte, zusätzliche Verzögerung) zum Drucken an die Druckeinrichtung 3 geliefert.

Erst dann wird die o.g. Teilmenge der dem ("Test"-) Daten-Ausgabe-Auftrag zugeordneten Daten-Sätze (fertig) bereit- bzw. zusammengestellt, und zum Drucken an die Druckeinrichtung 3 geliefert.

Nach dem Liefern der dem ("Test-") Daten-Ausgabe-Auftrag zugeordneten Daten-Satz-Teilmenge (bzw. der entsprechenden Daten-Satz-Druck-Files ("Dokumente")) an die Druckeinrichtung 3 werden diese ― als "Test-Druck" - dort ausgedruckt (vgl. den in Figur 2 gezeigten Verfahrensschritt C).

Anschließend kann der entsprechende Ausdruck - manuell und/oder automatisiert ― auf mögliche (z.B. bankfachliche) Fehler hin untersucht, d.h. kontrolliert werden (vgl. den in Figur 2 gezeigten Verfahrensschritt D).

Für den Test-Druck (bzw. als für den Test-Druck zusammengestellte, an die Druckeinrichtung 3 gelieferte, und dort ausgedruckte Teilmengen-Daten-Sätze) können z.B. statt auf einen "kompletten" Konto-Satz bezogene Daten-Sätze lediglich auf bestimmte, vorausgewählte "Standard-" Test-Konten bezogene Daten-Sätze verwendet werden. Als "Standard-" Test-Konten können z.B. Konten verwendet werden, die ein möglichst breites Spektrum des entsprechenden, "kompletten" Konto-Satzes repräsentieren (z.B. Test-Konten mit jeweils unterschiedlichen Kombinationen von Kunden-Arten (Privatkunden, Firmenkunden, Kunden in verschiedenen Ländern), jeweils zu verwendenden Beilagen, jeweils zu verwendenden Sprachen, Kunden-Prioritäten, etc., etc.). Die entsprechenden Test-Konten angebende, bzw. die Test-Konten aus der Vielzahl von Konten des jeweiligen "kompletten" Daten-Ausgabe-Auftrags auswählende Daten können z.B. in einer entsprechenden Datenbank 60 ("Selective Account Database") abgespeichert sein.

Bevorzugt werden ― bei der Kommunikation zwischen der Daten-Ausgabe-Steuereinrichtung 2, und der Druckeinrichtung 3 - die Daten der Daten-Satz-Teilmenge des ("Test") Ausgabe-Auftrags (und ggf. ein diese kennzeichnender File-Name) in eine entsprechende, spezielle Test-Spool-Queue geschrieben.

Des weiteren kann - vorteilhaft ― der o.g. Teilmengen-Test-Druck an der Druckeinrichtung 3 unter Verwendung einer speziellen, separaten Test-Papier-Rolle 5 erfolgen, bzw. unter Verwendung eines speziellen, im Stapeldruckverfahren bedruckten Endlos-Papiers.

Nach ― oder bereits während - dem o.g. Test-Druck kann (insbesondere automatisch, oder "von Hand" ― insbesondere nach Kontrolle des Test-Drucks, und (falls dieser fehlerfrei ist) entsprechender Freigabe - ) ein dem o.g. speziellen "Test"-Daten-Ausgabe-Auftrag (bzw. dem o.g. "normalen", jedoch nur zum o.g. Daten-Satz-Teilmengen-Ausdruck führenden Daten-Ausgabe-Auftrag) entsprechender "endgültiger" Daten-Ausgabe-Auftrag ausgelöst bzw. generiert werden (alternativ kann ― wie bereits oben erwähnt ― bereits während des - fertigen ― Bereit- bzw. Zusammenstellens der o.g. Teilmenge der Daten-Sätze bzw. Daten-Satz-Druck-Files mit dem ― teilweisen bzw. unvollständigen ("halbfertigen") - Zusammenstellen der übrigen Daten-Sätze bzw. Daten-Satz-Druck-Files begonnen werden).

In Reaktion auf den "endgültigen" Daten-Ausgabe-Auftrag wird ― anders als beim ("Test-") Daten-Ausgabe-Auftrag ― (entsprechend ähnlich wie bei "normalen" Daten-Ausgabe-Aufträgen im "Normal-Betriebs-Modus") nicht nur die o.g. Teilmenge der dem entsprechenden Daten-Ausgabe-Auftrag zugeordneten Daten-Sätze bzw. Daten-Satz-Druck-Files fertig bereit- bzw. zusammengestellt, sondern sämtliche dem entsprechenden Daten-Ausgabe-Auftrag zugeordneten Daten-Sätze bzw. Daten-Satz-Druck-Files (z.B. auf den "kompletten" Konto-Satz bezogene Daten-Sätze).

Die - fertige - Bereit- bzw. Zusammenstellung der Daten-Sätze kann dabei ― entsprechend ähnlich wie bei "normalen" Daten-Ausgabe-Aufträgen im "Normal-Betriebs-Modus" ― umgehend in Reaktion auf den entsprechenden, "endgültigen " Daten-Ausgabe-Auftrag erfolgen, oder - bewußt ― um eine gewisse Verzögerungszeit verzögert.

Falls gewünscht, kann das Daten-Ausgabe-System 1 vorher noch vom o.g. "Test-Betriebs-Modus" zurück in den o.g. "Normal-Betriebs-Modus" gebracht werden.

Die - komplett - bereit- bzw. zusammengestellten Daten-Sätze bzw. Daten-Satz-Druck-Files können auf einer entsprechenden Speichereinrichtung bzw. Datenbank―Einrichtung zwischengespeichert, und (entsprechend ähnlich wie bei "normalen" Daten-Ausgabe-Aufträgen im "Normal-Betriebs-Modus" umgehend, oder - bewußt ― um eine gewisse Verzögerungszeit verzögert) zum Drucken an die Druckeinrichtung 3 geliefert werden.

Nach dem Liefern der dem "endgültigen" Daten-Ausgabe-Auftrag zugeordneten - kompletten - Daten-Sätze (bzw. der entsprechenden Daten-Satz-Druck-Files ("Dokumente")) an die Druckeinrichtung 3 werden diese ― als "endgültiger Komplett-Druck" - dort ausgedruckt (vgl. den in Figur 2 gezeigten Verfahrensschritt E).

Bevorzugt werden ― bei der Kommunikation zwischen der Daten-Ausgabe-Steuereinrichtung 2, und der Druckeinrichtung 3 - die Daten-Satz-Daten des "endgültigen" Ausgabe-Auftrags (und ggf. ein diese kennzeichnender File-Name) in eine entsprechende ― von der o.g. Test-Spool-Queue unterschiedliche ― Spool-Queue geschrieben.

Des weiteren kann - vorteilhaft ― der o.g., endgültige Komplett-Druck an der Druckeinrichtung 3 unter Verwendung einer von der o.g. speziellen, separaten Test-Papier-Rolle 5, bzw. vom o.g. im Stapeldruckverfahren bedruckten EndlosPapier unterschiedlichen (hier nicht dargestellten) Papier-Rolle erfolgen.

Um die Anonymität der Kunden zu wahren, kann beim o.g. Test-Druck ein Teil der in der - vorab gelieferten - Teilmenge der Ausgabe-Daten-Sätze enthaltenen Daten nicht ausgedruckt werden (und/oder es kann der entsprechende Teil der Daten nicht bereit- bzw. zusammengestellt, und/oder von der Daten-Ausgabe-Steuereinrichtung 2 nicht an die an die Druckeinrichtung 3 geliefert werden). Bei den ― nicht ausgedruckten ― Daten kann es sich z.B. um den jeweiligen Nutzer identifizierende Daten handeln (z.B. Vor- und/oder Nachnamen, bzw. Firmennamen, Adressen, usw.).

Alternativ oder zusätzlich kann ― z.B. zur Wahrung der Anonymität von Kunden - beim o.g. Test-Druck ein Teil der in der - vorab gelieferten - Teilmenge der Ausgabe-Daten-Sätze enthaltenen Daten zwar ausgedruckt, dann aber überdruckt werden, insbesondere so, dass er unleserlich ist. Bei den ― überdruckten ― Daten kann es sich - wiederum - z.B. um den jeweiligen Nutzer identifizierende Daten handeln (z.B. Vor- und/oder Nachnamen, bzw. Firmennamen, Adressen, usw.).

Vorteilhaft wird beim Test-Druck die - vorab gelieferte - Teilmenge der Ausgabe-Daten-Sätze zusammen mit zusätzlichen Daten an der Druckeinrichtung 3 ausgedruckt, die den Ausdruck als Test-Druck kennzeichnen (z.B. den Ausdruck mit der Aufschrift bzw. einem Overlay "Test" oder "Verify" versehen). Diese zusätzlichen Test-Druck-Kennzeichnungs-Daten können beim Bereit- bzw. Zusammenstellen der Ausgabe-Daten-Sätze (am Ende des Bereit- bzw. Zusammenstellungs-Vorgangs) zu diesen hinzugefügt bzw. in diese eingebaut werden (bzw. von der Daten-Ausgabe-Steuereinrichtung 2 zusammen mit den Ausgabe-Daten-Sätzen an die Druckeinrichtung 3 geliefert werden). Vorteilhaft werden mit dem Overlay bzw. der Aufschrift "Test" bzw. "Verify" den jeweiligen Nutzer identifizierende Daten (Vor- und/oder Nachname, bzw. Firmenname, und/oder Adresse) (oder ein Teil hiervon) "überdruckt" (so dass Vor- und/oder Nachname, bzw. Firmenname, und/oder Adresse nicht mehr lesbar sind) oder ― besonders vorteilhaft - so angedruckt (z.B. durch Verwendung entsprechend beabstandeter Raster-Punkte für die jeweiligen Buchstaben und/oder durch Verwendung von Buchstaben mit entsprechend beabstandeten Kontur-Linien, etc.), dass der Vor- und/oder Nachname, bzw. Firmenname, und/oder die Adresse, etc. noch lesbar sind. Durch das Überdrucken bzw. Andrucken der o.g. Daten (Vor- und/oder Nachname, bzw. Firmenname, und/oder Adresse) kann verhindert werden, dass ein Testausdruck ― versehentlich - versendet wird.

Die oben kurz erwähnte, ggf. mögliche - verzögerte - Bereit- bzw. Zusammenstellung, und/oder - verzögerte - Lieferung der Daten-Sätze bzw. Daten-Satz-Druck-Files an die Druckeinrichtung 3 für einen "normalen" Daten-Ausgabe-Auftrag im "Normal-Betriebs-Modus" (bzw. ggf. auch im "Test-Betriebs-Modus") kann z.B. in Abhängigkeit von die Auslastung der Druckeinrichtung 3 kennzeichnenden Steuer-Daten erfolgen, und/oder in Abhängigkeit von Steuer-Daten, die die Priorität eines (dem jeweiligen Daten-Satz zugeordneten) Nutzers (Bank-Kunden) kennzeichnen ("Nutzer-Prioritäts-Daten"), und/oder in Abhängigkeit von Steuer-Daten, die ― Nutzer-unabhängig - die Priorität des jeweiligen Daten-Satzes kennzeichnen ("Daten-Satz-Prioritäts-Daten"), etc., etc.

Die ― vorbestimmte bzw. berechnete ― (bewusst (zusätzlich zu systemimmanenten Verzögerungen) gewählte) Verzögerungs-Zeitdauer kann relativ groß sein, z.B. mehr als eine Stunde oder mehr als 24 Stunden, insbesondere mehr als eine oder mehrer Wochen betragen.

Durch eine ― abhängig von der jeweiligen Auslastung der Druckeinrichtung 3, und der Nutzer- und/oder Daten-Satz-Priorität - flexibel gewählte Verzögerungs-Zeitdauer für den jeweiligen Daten-Satz kann erreicht werden, dass ― auch zu "Stoßzeiten" (z.B. am Monats- oder Jahresende) ― die Druckeinrichtung 3 nicht überlastet wird (da dann vorwiegend Daten-Sätze für Nutzer mit hohen Nutzer-Prioritäts-Daten, und/oder Daten-Sätze mit ― unabhängig vom jeweiligen Nutzer ― hohen Daten-Satz-Prioritäts-Daten gedruckt werden können).

Die o.g. Daten-Ausgabe-Steuereinrichtung 2 kann so eingerichtet sein, dass die Bereitstellung / Lieferung der Daten-Sätze für Nutzer mit hoher Priorität - tendenziell ― weniger stark verzögert wird, als die Bereitstellung / Lieferung der Daten-Sätze für Nutzer mit niedriger Priorität (und z.B. so, dass für Nutzer mit höchster Priorität die Daten-Sätze ― falls möglich - unverzögert bereitgestellt / geliefert werden).

Entsprechend ähnlich kann die Daten-Ausgabe-Steuereinrichtung 2 so eingerichtet sein, dass die Bereitstellung / Lieferung von Daten-Sätzen mit ― nutzerunabhängig ― hoher Daten-Satz-Priorität - tendenziell ― weniger stark verzögert wird, als die Bereitstellung / Lieferung von Daten-Sätzen mit ― nutzerunabhängig ― niedriger Daten-Satz-Priorität (und z.B. so, dass Daten-Sätze mit höchster Daten-Satz-Priorität ― falls möglich, und unabhängig vom jeweils betroffenen Nutzer - unverzögert bereitgestellt / geliefert werden).

Die o.g. - verzögerte - Bereit- bzw. Zusammenstellung, und/oder - verzögerte - Lieferung der Daten-Sätze bzw. Daten-Satz-Druck-Files an die Druckeinrichtung 3 kann ― insbesondere für Nutzer mit eine niedrige Nutzer-Priorität kennzeichnenden Nutzer-Prioritäts-Daten, und/oder für Daten-Sätze mit eine niedrige Daten-Satz-Priorität kennzeichnenden Daten-Satz-Prioritäts-Daten - alternativ oder zusätzlich z.B. auch so erfolgen, dass - zunächst - einem Nutzer zugeordnete Ausgabe-Daten-Sätze gesammelt, und erst dann von der Daten-Ausgabe-Steuereinrichtungen 2 an die Druckeinrichtung 3 geliefert, und dort ausgedruckt werden, wenn die Gesamt-Datenmenge der dem Nutzer zugeordneten, gesammelten Ausgabe-Daten-Sätze eine vorbestimmte Mindest-Größe übersteigt, bzw. die in den gesammelten Ausgabe-Daten-Sätzen enthaltenen Daten beim Drucken eine vorbestimmte Mindest-Druckfläche überschreiten.

Hierbei kann die Mindest-Größe bzw. die Mindest-Druckfläche ― wiederum - von den dem jeweiligen Nutzer zugeordneten Nutzer-Prioritäts-Daten abhängen.

Dadurch kann erreicht werden, dass ― für ein- und denselben Kunden gleichzeitig ― ein oder mehrere eine Vielzahl von Daten-Sätzen enthaltende Ausdrucke erstellt werden können, die in ein- und demselben Kuvert versendet werden können.

Dadurch können ― in erheblichem Maß - Versandkosten eingespart werden.

Vorzugsweise werden zu diesem Zweck die einem bestimmten Nutzer zugeordnete Daten-Sätze so gesammelt, und an die Druckeinrichtung 3 geliefert, dass auf ein- und derselben Papier-Rolle 5 möglichst viele ein- und demselben Nutzer zugeordnete Ausgabe-Daten-Sätze gedruckt werden.

Bei einer bevorzugten Ausgestaltung des Daten-Ausgabe-Systems 1 werden die einem bestimmten Nutzer zugeordneten - gesammelten - Ausgabe-Daten-Sätze spätestens dann an die Druckeinrichtung 3 geliefert, und ausgedruckt, wenn seit der Anforderung des ersten ― den jeweiligen Nutzer betreffenden - Ausgabe-Daten-Satzes (d.h. dem ersten Daten-Ausgabe-Auftrag) eine vorbestimmte Höchst-Zeitdauer vergangen ist.

Die Höchst-Zeitdauer kann ― wiederum ― abhängig von den dem jeweiligen Nutzer zugeordneten Nutzer-Prioritäts-Daten gewählt sein, und ― insbesondere bei einem Nutzer mit eine hohe Nutzer-Priorität kennzeichnenden Nutzer-Prioritäts-Daten ― z.B. kleiner-gleich 1 Woche, insbesondere kleiner-gleich 24 Stunden sein, bzw. ― insbesondere bei einem Nutzer mit eine niedrige Nutzer-Priorität kennzeichnenden Nutzer-Prioritäts-Daten ― größer als 24 Stunden, insbesondere größer als eine Woche sein (und z.B. kleiner als zwei Monate, insbesondere kleiner als einen Monat sein).

Dadurch kann verhindert werden, dass ein Nutzer zu lange auf die für ihn bestimmten, ihm zuzusendenden Daten (Konto-Auszüge, Depot-Auszüge, etc.) warten muß.

Die o.g. - verzögerte - Bereit- bzw. Zusammenstellung, und/oder - verzögerte - Lieferung der Daten-Sätze bzw. Daten-Satz-Druck-Files an die Druckeinrichtung 3 kann - alternativ oder zusätzlich zum oben Gesagten - z.B. auch in Abhängigkeit von der Kapazität der durch die Druckeinrichtung 3 bedruckten Papier-Rolle 5 erfolgen, etc., etc.

Dadurch kann ― insgesamt ― eine kostengünstige, schnelle, Kapazitätsengpässe vermeidende, und dennoch spezifischen Kundenwünschen flexibel nachkommende Daten-Ausgabe erreicht werden.

Bei einer vorteilhaften Ausgestaltung des Daten-Ausgabe-Systems 1 kann ― entsprechend ähnlich wie oben für den Druck-Daten-Ausgabe-Kanal 12a ("Papier-Kanal") beschrieben ― zusätzlich auch für den elektronischen Daten-Ausgabe-Kanal 12b ("SWIFT-Kanal") ein "Test-Betriebs-Modus" des Daten-Ausgabe-Systems 1 vorgesehen sein. In Reaktion auf einen entsprechenden (insbesondere "von Hand" ausgelösten, "normalen" oder speziellen "Test-") Daten-Ausgabe-Auftrag werden dann (entsprechend wie oben beschrieben) zunächst nicht sämtliche, dem entsprechenden Daten-Ausgabe-Auftrag zugeordneten Daten-Sätze (fertig) bereit- bzw. zusammengestellt, sondern lediglich eine ― vorbestimmte ― Teilmenge hiervon (z.B. weniger als 50%, insbesondere weniger als 20% oder 10% der ― gesamten ― dem jeweiligen Daten-Ausgabe-Auftrag zugeordneten Daten-Sätze (jedoch z.B. mehr als 1% oder 2%, insbesondere mehr als 5% der jeweiligen Daten-Sätze, etc.) ― z.B. weniger als 10.000 oder 2.000 Daten-Sätze, und/oder z.B. mehr als 50 oder 100 Daten-Sätze, usw.).

Die vorbestimmte Teilmenge der Daten-Sätze wird dann - gesteuert durch die Daten-Ausgabe-Steuereinrichtung 2 ― auf einer entsprechenden Speichereinrichtung entsprechend (zwischen-)gespeichert, und über den elektronischen Daten-Ausgabe-Kanal 12b an das oder die o.g. elektronischen Datenkommunikations-Systeme 4 geliefert, sodaß die Ausgabe-Daten-Sätze ― zu Test-Zwecken - durch entsprechend speziell autorisierte Test-System-Nutzer, insbesondere einen System-Administrator, elektronisch abgerufen werden können.

Sind die Test-Daten-Sätze korrekt, kann (insbesondere "von Hand" (oder automatisch)) ein dem o.g. speziellen "Test-" Daten-Ausgabe-Auftrag (bzw. dem o.g. "normalen", jedoch nur zur o.g. Daten-Satz-Teilmengen-Ausgabe führenden Daten-Ausgabe-Auftrag) entsprechender "endgültiger" Daten-Ausgabe-Auftrag ausgelöst bzw. generiert werden.

In Reaktion auf den "endgültigen" Daten-Ausgabe-Auftrag wird ― anders als beim ("Test") Daten-Ausgabe-Auftrag ― (entsprechend ähnlich wie bei "normalen" Daten-Ausgabe-Aufträgen im "Normal-Betriebs-Modus") nicht nur die o.g. Teilmenge der dem entsprechenden Daten-Ausgabe-Auftrag zugeordneten Daten-Sätze fertig bereit- bzw. zusammengestellt, sondern sämtliche dem entsprechenden Daten-Ausgabe-Auftrag zugeordneten Daten-Sätze.

Die Daten-Sätze werden dann - gesteuert durch die Daten-Ausgabe-Steuereinrichtung 2 ― auf einer entsprechenden Speichereinrichtung entsprechend (zwischen-)gespeichert, und über den elektronischen Daten-Ausgabe-Kanal 12b an das oder die o.g. elektronischen Datenkommunikations-Systeme 4 geliefert, sodaß die kompletten Ausgabe-Daten-Sätze dann von den jeweils autorisierten, normalen System-Nutzern, insbesondere Bank-Kunden, elektronisch abgerufen werden können.

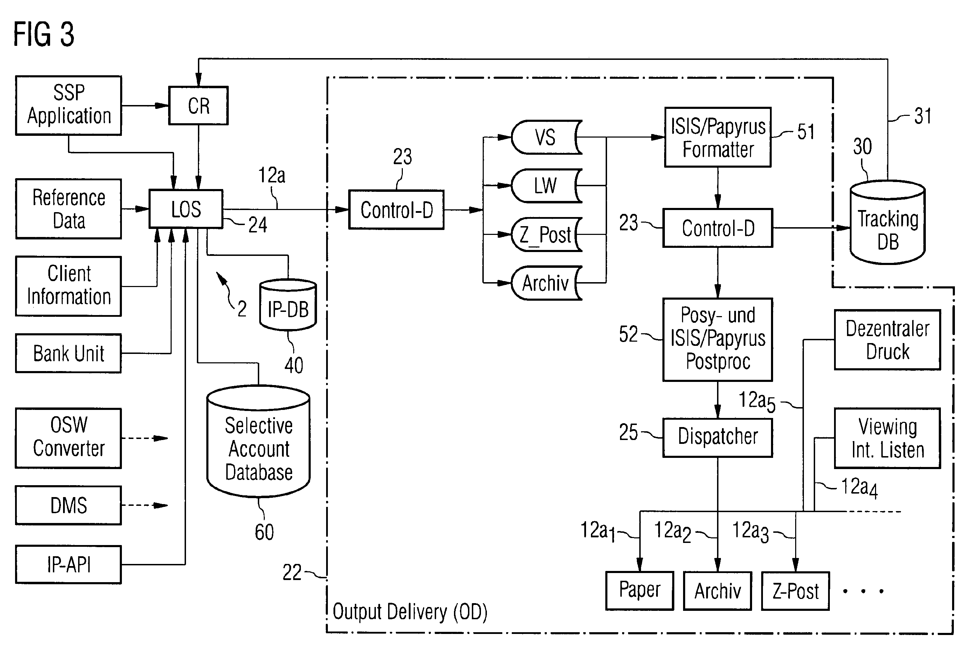

Bei einer vorteilhaften Ausgestaltung bzw. Weiterbildung des oben anhand von Figur 1 und 2 beschriebenen Daten-Ausgabe-Systems 1 bzw. -Verfahrens wird gemäß Figur 3 (und wie in Figur 1 gestrichelt dargestellt) die o.g. Daten-Ausgabe-Steuer-Funktion (insbesondere die Daten-Satz-Sammel- bzw. Weiterleitungs-Verzögerungs-Funktion, bzw. die o.g. Test-Daten-Sammel- bzw. -Weiterleitungs-Funktion (und ggf. weitere) Funktionen) nicht durch die o.g. Daten-Ausgabe-Steuereinrichtung 2 alleine, sondern durch die Daten-Ausgabe-Steuereinrichtung 2 (insbesondere ein oder mehrere dort vorgesehene Software-Programme bzw. ― Programm-Module 24 ("LOS")), und eine mit der Daten-Ausgabe-Steuereinrichtung 2 zusammenwirkende - weitere ― Daten-Ausgabe-Steuereinrichtung 22 wahrgenommen (insbesondere durch ein dort vorgesehenes Software-Programm bzw. -Programm-Modul 23 ("Control-D")).

Die weitere Daten-Ausgabe-Steuereinrichtung 22 kann z.B. entfernt (z.B. mehr als 10m, 1 km, etc. entfernt) von der Daten-Ausgabe-Steuereinrichtung 2 angeordnet sein, z.B. in der Nähe oder bei der o.g. Druckeinrichtung 3 (bzw. in einem Druckzentrum), und die Daten-Ausgabe-Steuereinrichtung 2 z.B. in einem Rechenzentrum, z.B. dem Rechenzentrum der das Daten-Ausgabe-Verfahren nutzenden Bank / Versicherung.

Wie aus Figur 3 hervorgeht, können die von der Daten-Ausgabe-Steuereinrichtung 22 ― ggf. verzögert ― bereitgestellten, bzw. ― ggf. verzögert ― gelieferten (d.h. vorher auf einer hier nicht gezeigten, mit der Daten-Ausgabe-Steuereinrichtung 22 verbundenen Speichereinrichtung zwischengespeicherten) Daten-Sätze bzw. Daten-Satz-Druck-Files (bzw. entsprechende Test-Druck-Files) z.B. an einen ― mit der o.g. Druckeinrichtung 3 verbundenen ― End-Daten-Ausgabe-Kanal 12a₁ "Paper" geliefert werden (und dann ― entsprechend wie oben beschrieben - von der Druckeinrichtung 3 ausgedruckt werden).

Alternativ oder zusätzlich können ― wie in Figur 3 dargestellt ist - die (z.B. auch an den End-Daten-Ausgabe-Kanal 12a₁ "Paper" (oder "Z_Post", etc.) gelieferten, z.B. von der Druckeinrichtung 3 ausgedruckten) Daten-Sätze bzw. Daten-Satz-Druck-Files z.B. auch an einen End-Daten-Ausgabe-Kanal 12a₂ "Archiv" geliefert werden. Die entsprechenden ― in einem fertigen Druck-Format vorliegenden ― Daten-Sätze bzw. Daten-Satz-Druck-Files können dann ― zur Archivierung ― (im o.g. Druck-Format, oder entsprechend komprimiert) in einer entsprechenden (hier nicht gezeigten) Datenbank dauerhaft abgespeichert werden (z.B. über eine gewisse Mindest-Zeitdauer, z.B. länger als 1 Monat, oder länger als 1 Jahr, insbesondere länger als 4 Jahre, etc.).

Alternativ oder zusätzlich können von der Daten-Ausgabe-Steuereinrichtung 22 ― ggf. verzögert ― auch Daten-Sätze bzw. Daten-Satz-Druck-Files an einen End-Daten-Ausgabe-Kanal 12a₃ "Z_Post" geliefert, und von der Druckeinrichtung 3 ― oder einer weiteren Druckeinrichtung ― gedruckt werden. Anders als z.B. beim o.g. End-Daten-Ausgabe-Kanal 12a₁ "Paper" werden beim End-Daten-Ausgabe-Kanal 12a₃ "Z_Post" die erstellten Ausdrucke nach dem Kuvertieren nicht extern verschickt, sondern "banklagernd" aufbewahrt, und vom jeweiligen Kunden selbst abgeholt.

Wie aus Figur 3 weiter hervorgeht, können alternativ oder zusätzlich von der Daten-Ausgabe-Steuereinrichtung 22 z.B. (ggf. auf verzögerte Weise) auch Daten-Sätze bzw. Daten-Satz-Druck-Files an einen End-Daten-Ausgabe-Kanal 12a₅ "Dezentraler Druck" geliefert, und dezentral an - von der Druckeinrichtung 3 unterschiedlichen, ggf. weit von dieser und/oder von der Daten-Ausgabe-Steuereinrichtung 22 entfernt angeordneten (z.B. mehr als 1 km, 10km oder 100km entfernt angeordneten) - weiteren Druckeinrichtungen ausgedruckt werden.

Alternativ oder zusätzlich können von der Daten-Ausgabe-Steuereinrichtung 22 entsprechende Daten-Sätze bzw. Daten-Satz-Druck-Files z.B. auch an einen End-Daten-Ausgabe-Kanal 12a₄ "Viewing, interne Listen" geliefert werden, in ein entsprechendes elektronisches Format (z.B. das pdf-Format) umgewandelt, und von Mitarbeitern der Bank bzw. Versicherung ― lokal (d.h. entfernt von der o.g. Steuereinrichtung 22 und/oder von der o.g. Druckeinrichtung 3, z.B. mehr als 1 km, 10km oder 100km entfernt hiervon) - an einem dem jeweiligen Mitarbeiter oder der jeweiligen Mitarbeitergruppe zugeordneten Rechner (bzw. der diesem zugeordneten Druckeinrichtung) ausgedruckt werden.

Alternativ oder zusätzlich können entsprechende Daten-Sätze bzw. Daten-Satz-Druck-Files - wie aus Figur 3 hervorgeht jeweils gesteuert durch einen Dispatcher 25 - auch an einen oder mehrere weitere End-Daten-Ausgabe-Kanäle geliefert werden, z.B. an einen End-Daten-Ausgabe-Kanal "elektronische Post", etc.

Im Kanal "elektronische Post" können die Daten-Sätze in ein entsprechendes elektronisches Format (z.B. das pdf-Format) umgewandelt, und elektronisch, z.B. per e-mail (und beigefügter pdf-Datei) an die entsprechenden Kunden versandt, und von den Kunden lokal (d.h. entfernt von der o.g. Steuereinrichtung 22 und/oder von der o.g. Druckeinrichtung 3, z.B. mehr als 1km, 10km oder 100km entfernt hiervon) am Rechner des jeweiligen Kunden (bzw. an einer dem Rechner zugeordneten Druckeinrichtung) ausgedruckt werden. Alternativ oder zusätzlich kann der jeweilige Kunde die entsprechenden Daten auch über eine spezielle (von dem Kanal "elektronische Post" mit den entsprechenden Daten belieferte) ― nur dem jeweiligen Kunden zugängliche bzw. passwortgeschützte ― Intemetseite abrufen, und ― lokal ― ausdrucken, etc.

Wie aus Figur 3 weiter hervorgeht, werden von der Daten-Ausgabe-Steuereinrichtung 22 (insbesondere durch das Software-Programm bzw. ― Programm-Modul 23) Daten bezüglich der beim o.g. Daten-Ausgabe-Verfahren anfallenden Kosten, insbesondere ― für den End-Daten-Ausgabe-Kanal 12a₁, 12a₅, etc. - bezüglich der Anzahl / Porto-Kosten der an einen bestimmten Kunden verschickten Sendungen bzw. Kuverts (und/oder bezüglich der beim End-Daten-Ausgabe-Kanal "elektronische Post", und/oder "Z_Post", etc. für einen bestimmten Kunden anfallenden Kosten, etc.) in einer entsprechenden Speichereinrichtung 30 (tracking database ("tracking DB")) abgespeichert, und ― über einen Kanal 31 ― an die o.g. Steuereinrichtung 2 (insbesondere das Software-Programm bzw. ― Programm-Modul 24 ("LOS")) geliefert, so dass den o.g. Daten-Sätzen ― für den jeweiligen Kunden ― entsprechende Daten-Ausgabe-Kosten-, insbesondere Porto-Daten hinzugefügt, und so diese Kosten an den Kunden weiterbelastet werden können.

Wie bereits erwähnt, wird bei der in Figur 3 gezeigten vorteilhaften Ausgestaltung der Erfindung die Daten-Ausgabe-Steuer-Funktion ― gemeinsam ― durch die Steuereinrichtung 2, und die Steuereinrichtung 22 erfüllt.

Wie aus Figur 3 hervorgeht, können die von der Daten-Ausgabe-Steuereinrichtung 2 bereitgestellten / gesammelten Daten-Sätze in einer mit der Daten-Ausgabe-Steuereinrichtung 2 verbundenen Speichereinrichtung 40 (hier: einer IP-Datenbank (IP-DB)) zwischengespeichert, wieder ausgelesen, und - wie oben erläutert ggf. verzögert - über den Kanal 12a an die Daten-Ausgabe-Steuereinrichtung 22, insbesondere das o.g. Software-Programm bzw. ― Programm-Modul 23 weitergeleitet werden.

Wie ebenfalls in Figur 3 gezeigt ist, werden entsprechende, von dem Software-Programm bzw. -Programm-Modul 23 ― ggf. verzögert - an ein entsprechendes Software-Programm bzw. -Programm-Modul 51 ("ISIS/PAPYRUS FORMATTER") weitergeleitete Daten-Sätze durch das Software-Programm bzw. -Programm-Modul 51 formatiert, und dann ― in formatierter Form - an das o.g. Software-Programm bzw. -Programm-Modul 23 (zurück-) geliefert.

Die an das Software-Programm bzw. -Programm-Modul 23 (zurück-) gelieferten Daten-Sätze werden von dort aus ― ggf. verzögert - an ein entsprechendes (weiteres) Software-Programm bzw. -Programm-Modul 52 ("ISIS/PAPYRUS POSTPROCESSING") weitergeleitet, dort einem entsprechenden postprocessing―Verfahren unterzogen, und dann an den o.g. Dispatcher 25 weitergeleitet.

Wie bereits vorher erwähnt, können ― auf entsprechend ähnliche Weise wie bei der Daten-Ausgabe-Steuereinrichtung 2 ― durch das Software-Programm bzw. ― Programm-Modul 23 entsprechende (z.B. von der Steuereinrichtung 2, und/oder dem Software-Programm bzw. -Programm-Modul 51 empfangene) Daten-Sätze in der bereits oben kurz erwähnten, mit der Daten-Ausgabe-Steuereinrichtung 22 (bzw. dem Software-Programm bzw. -Programm-Modul 23) verbundenen (hier nicht dargestellten) Speichereinrichtung zwischengespeichert werden. Dadurch ist es möglich, dass diese erst zu dem jeweils gewünschten Zeitpunkt, d.h. ggf. verzögert wieder ausgelesen, und ― wie oben erläutert ggf. verzögert ― von dem Software-Programm bzw. -Programm-Modul 23 an das Software-Programm bzw. -Programm-Modul 51, und/oder - insbesondere ― das Software-Programm bzw. - Programm-Modul 52 weitergeleitet, und ausgedruckt werden können.

Im o.g. "Test-Betriebs-Modus" des Daten-Ausgabe-Systems 1 werden ― wie bereits oben angedeutet - in Reaktion auf einen entsprechenden Test-Daten-Ausgabe-Auftrag von der Daten-Ausgabe-Steuereinrichtung 2 zunächst nicht sämtliche, dem entsprechenden Daten-Ausgabe-Auftrag zugeordneten Daten-Sätze bzw. Daten-Satz-Druck-Files (fertig) bereit- bzw. zusammengestellt, und auf der o.g. Speichereinrichtung 40 abgespeichert, sondern lediglich die o.g. ― durch die auf der Datenbank 60 gespeicherten Daten definierte ― Teilmenge hiervon. Diese Daten-Sätze werden ― wie oben erläutert i.d.R. unmittelbar nach dem Bereit- bzw. Zusammenstellen ― an die weitere Daten-Ausgabe-Steuereinrichtung 22 weitergeleitet, und i.d.R. ohne Verzögerung ausgedruckt. Die übrigen, dem entsprechenden "Komplett"-Daten-Ausgabe-Auftrag zugeordneten Daten-Sätze können ― wie oben erläutert (z.T. auch parallel hierzu) ― zunächst lediglich teilweise bzw. unvollständig zusammengestellt, und erst nach der "Freigabe" komplett zusammengestellt, auf der Speichereinrichtung 40 abgespeichert, und ― ggf. nach einer weiteren, "bewußten" Verzögerung ― an die Daten-Ausgabe-Steuereinrichtung 22 weitergeleitet, und ― ggf. zusätzlich nochmals "bewußt" verzögert - ausgedruckt werden.

## Patentansprüche

1. Daten-Ausgabe-System (1), welches aufweist:
- eine Druckeinrichtung (3);
- eine Datenbank-Einrichtung (7), in welcher für eine Vielzahl von Daten-Ausgabe-System-Nutzern entsprechende Nutz- und/oder Steuerdaten gespeichert sind; und
- eine Daten-Ausgabe-Steuereinrichtung (2), welche zu von der Daten-Ausgabe-Steuereinrichtung (2) bestimmten Zeitpunkten ― entsprechenden Nutzern zugeordnete - Ausgabe-Daten-Sätze an die Druckeinrichtung (3) liefert, wobei eine vordefinierte Teilmenge der Ausgabe-Daten-Sätze ― zur Durchführung eines Test-Drucks - bereits vorab an die Druckeinrichtung (3) geliefert werden.

2. Daten-Ausgabe-System (1) nach Anspruch 1, bei welchem die vorab gelieferte Teilmenge der Ausgabe-Daten-Sätze - als Test-Druck - an der Druckeinrichtung (3) ausgedruckt wird.

3. Daten-Ausgabe-System (1) nach Anspruch 2, bei welchem ― nach dem Ausdruck der vorab gelieferten Ausgabe-Daten-Satz-Teilmenge - die gesamten, zu den von der Daten-Ausgabe-Steuereinrichtung (2) bestimmten Zeitpunkten an die Druckeinrichtung gelieferten Ausgabe-Daten-Sätze an der Druckeinrichtung (3) ausgedruckt werden.

4. Daten-Ausgabe-System (1) nach einem der vorhergehenden Ansprüche, bei welchem bei der vorab gelieferten Teilmenge der Ausgabe-Daten-Sätze ein Teil der enthaltenen Daten nicht ausgedruckt wird.

5. Daten-Ausgabe-System (1) nach Anspruch 4, bei welchem die nicht ausgedruckten Daten den jeweiligen Nutzer identifizierende Daten sind.

6. Daten-Ausgabe-System (1) nach einem der Ansprüche 1 bis 3, bei welchem bei der vorab gelieferten Teilmenge der Ausgabe-Daten-Sätze ein Teil der enthaltenen, ausgedruckten Daten überdruckt wird.

7. Daten-Ausgabe-System (1) nach Anspruch 6, bei welchem die Daten so überdruckt werden, dass sie unleserlich sind.

8. Daten-Ausgabe-System (1) nach Anspruch 6 oder 7, bei welchem die überdruckten Daten den jeweiligen Nutzer identifizierende Daten sind.

9. Daten-Ausgabe-System (1) nach einem der vorhergehenden Ansprüche, bei welchem die vorab gelieferte Teilmenge der Ausgabe-Daten-Sätze zusammen mit zusätzlichen Daten an der Druckeinrichtung (3) ausgedruckt wird, die den Ausdruck als Test-Druck kennzeichnen.

10. Daten-Ausgabe-System (1) nach einem der vorhergehenden Ansprüche, bei welchem die in der Datenbank-Einrichtung (7) gespeicherten Steuerdaten einem bestimmten Nutzer zugeordnete Nutzer-Priorität-Daten enthalten.

11. Daten-Ausgabe-System (1) nach Anspruch 10, bei welchem vor der Vorab-Lieferung der vordefinierten Teilmenge der Ausgabe-Daten-Sätze Ausgabe-Daten-Sätze von Nutzern mit eine hohe Nutzer-Priorität kennzeichnenden Nutzer-Priorität-Daten an die Druckeinrichtung (3) geliefert, und ausgedruckt werden.

12. Daten-Ausgabe-System (1) nach Anspruch 10 oder 11, welches Mittel aufweist zum Definieren der Nutzer-Priorität-Daten durch einen System-Administrator.

13. Daten-Ausgabe-System (1) nach einem der Ansprüche 10 bis 12, welches Mittel aufweist zum Definieren der Nutzer-Priorität-Daten durch den jeweiligen Nutzer.

14. Daten-Ausgabe-System (1) nach einem der vorhergehenden Ansprüche, bei welchem die vorab gelieferte Teilmenge der Ausgabe-Daten-Sätze an der Druckeinrichtung (3) auf einer separaten Papier-Rolle (5) ausgedruckt wird, bzw. auf einem separaten, im Stapeldruckverfahren bedruckten Endlos-Papier.

15. Daten-Ausgabe-System (1) nach Anspruch 14, bei welchem ― nach dem Ausdruck der vorab gelieferten Ausgabe-Daten-Satz-Teilmenge ― auf einer oder mehreren weiteren, bzw. einer separaten Papier-Rolle die gesamten, zu den von der Daten-Ausgabe-Steuereinrichtung (2) bestimmten Zeitpunkten an die Druckeinrichtung (3) gelieferten Ausgabe-Daten-Sätze an der Druckeinrichtung (3) ausgedruckt werden, insbesondere so, dass mit den jeweils gelieferten Ausgabe-Daten-Sätzen jeweils eine Papier-Rolle jeweils voll bedruckt wird.

16. Daten-Ausgabe-Verfahren, insbesondere unter Verwendung eines Daten-Ausgabe-Systems (1) nach einem der Ansprüche 1 bis 15, mit einer Druckeinrichtung (3), einer Datenbank-Einrichtung (7), in welcher für eine Vielzahl von Nutzern entsprechende Nutz- und/oder Steuerdaten gespeichert sind, und einer Daten-Ausgabe-Steuereinrichtung (2), wobei das Verfahren die Schritte aufweist:
- Liefern von ― entsprechenden Nutzern zugeordneten - Ausgabe-Daten-Sätzen an die Druckeinrichtung (3) zu von der Daten-Ausgabe-Steuereinrichtung (2) bestimmten Zeitpunkten; und
- Vorab-Liefern einer vordefinierten Teilmenge der Ausgabe-Daten-Sätze an die Druckeinrichtung (3) zur Durchführung eines Test-Drucks.

17. Computer-Programm mit Programm-Code-Mitteln zum Durchführen der im Anspruch 16 angegebenen Verfahrensschritte, wenn das Programm auf einem Computer ausgeführt wird.

18. Computer-Programm mit Programm-Code-Mitteln nach Anspruch 17, welches auf einem computerlesbaren Speichermedium gespeichert ist.
